Europäisches Patentamt

European Patent Office

Office européen des brevets

(19)

(11) Veröffentlichungsnummer: **0 094 053**
**B1**

## (12) EUROPÄISCHE PATENTSCHRIFT

(45) Veröffentlichungstag der Patentschrift:
**15.10.86**

(21) Anmeldenummer: **83104464.9**

(22) Anmeldetag: **06.05.83**

(51) Int. Cl.⁴: **C 03 B 37/025,** C 03 B 19/00

(54) **Plasmaverfahren zur Herstellung eines dielektrischen Stabes.**

(30) Priorität: **12.05.82 DE 3217839**

(43) Veröffentlichungstag der Anmeldung:
**16.11.83 Patentblatt 83/46**

(45) Bekanntmachung des Hinweises auf die Patenterteilung:
**15.10.86 Patentblatt 86/42**

(84) Benannte Vertragsstaaten:
**DE FR GB IT NL**

(56) Entgegenhaltungen:
**EP-A-0 072 069**
**DE-A-2 605 483**
**DE-A-2 835 326**
**DE-A-2 913 726**
**DE-A-2 919 619**
**DE-B-2 715 333**
**FR-A-2 313 327**
**FR-A-2 418 777**
**US-A-4 135 901**

(73) Patentinhaber: **Schott Glaswerke,**
**Hattenbergstrasse 10, D-6500 Mainz (DE)**

(72) Erfinder: **Beerwald, Hans, Kalkgasse 2, D-5370 Kall-Sistig (DE)**
Erfinder: **Böhm, Günter, Haarholzer Strasse 21, D-4630 Bochum (DE)**
Erfinder: **Glomski, Günter, Zeppelinstrasse 5, D-4630 Bochum (DE)**

(74) Vertreter: **Rasper, Joachim, Dr., Bierstadter Höhe 22, D-6200 Wiesbaden (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

### Beschreibung

Die Erfindung betrifft ein Plasmaverfahren zur Herstellung eines dielektrischen Stabes aus gasförmigen Ausgangsmaterialien, bei dem der Stab durch Abscheidung auf die Stirnfläche in Achsrichtung wächst.

Solche Verfahren haben den Zweck, hochreine Glas- oder Keramikwerksoffe in Stabform herzustellen insbesondere Vormlinge aus Quarzglas, aus denen optische Wellenleiter für die Nachrichtentechnik gezogen werden.

Derartige Verfahren sind in folgenden Schriften offenbart: DE-B2-2715333, DE-A1-2835326, DE-A1-2913726 und DE-A1-2919619. Diese Schriften behandeln die Herstellung von Vorformlingen aus Quarzglas, die ein Gradientenindex-Profil aufweisen, was durch radial veränderte Dotierung des Stabes erreicht wird. Die hierfür benötigten Düsensysteme und Düsenbewegungen sowie die Zuführung des Dotierungsmaterials nehmen in diesen Schriften einen breiten Raum ein. Der Vorteil des Plasmaverfahrens gegenüber dem Verfahren mit Flammenhydrolyse ist erkannt. Die Düsen werden z. T. mit einer plasmaerzeugenden Vorrichtung versehen und als Plasmabrenner ausgebildet. Das Anfangsglied des Stabes, meist eine runde Platte, ist mit einem Antrieb versehen, der den Stab bei seiner Herstellung rotieren läßt.

Aus der EP-A1- 0072069, die nach Art. 54 (3) zum Stand der Technik zählt, ist ein Plasmaverfahren bekannt, bei dem der Glaskern und die Beschichtung gleichzeitig hergestellt werden. Das Anfangsglied befindet sich in einer rohrförmigen Reaktionskammer, in die senkrecht zur Längsachse das gasförmige Mantelmaterial und parallel zur Längsachse das gasförmige Kernmaterial eingebracht wird. Die Mikrowellen werden ebenfalls senkrecht zur Längsachse der Kammer und somit des herzustellenden Stabes eingestrahlt. Bei dieser Anordnung befinden sich die Düsen in der Plasmazone, die sich über die gesamte Reaktionskammer erstreckt.

Der Erfindung liegt die Aufgabe zu Grunde, die Reaktionszone und damit die Plasmazone auf eine Schicht und der Stirnfläche des herzustellenden Stabes zu beschränken und das Düsensystem außerhalb der Plasmazone zu installieren.

Diese Aufgabe wird erfindungsmäßig dadurch gelöst, daß über den Stab zur Stirnfläche hin Mikrowellenenergie geleitet wird, die an der Stirnfläche eine Gasentladung aufrecht erhält, in die mittels einer oder mehrerer Düsen das Ausgangsmaterial als Gasstrahl einströmt.

Um die Wellenleitereigenschaft des Stabes zu verbessern und um Zündung der Gasentladung am Düsensystem zu vermeiden ist nach einer weiteren Ausbildung der Erfindung der Stab koaxial in einem elektrisch leitfähigen Rohr anzuordnen. Das Rohr kann z. B. ein Graphitrohr sein oder ein Quarzrohr, das innen mit Graphit beschichtet ist oder mit temperaturbeständiger Metallfolie ausgelegt ist. Für die Innenbeschichtung mit Graphit können z. B. die in DE-B2-2837261 für Dorne vorgeschlagenen Verfahren angewandt werden. Der Innendurchmesser des Rohres muß so groß sein, daß die angeregte Hohlleitermode in dem Abschnitt, in dem der dielektrische Stab sich befindet, ausbreitungsfähig ist; er darf aber nicht so groß sein, daß die angeregte Hohlleitermode im leeren Rohr oberhalb der Stirnfläche auch ausbreitungsfähig ist. In diesem Bereich soll die Grenzfrequenz der Hohlleitermode höher sein als die benutzte Mikrowellenfrequenz.

Die mit der Erfindung erzielten Vorteile bestehen insbesondere darin, daß auf plasmaerzeugende Vorrichtungen an den Düsen verzichtet werden kann, daß das Düsensystem sich außerhalb der Reaktionszone befinden kann und damit feinere und kompliziertere Düsensyteme installiert werden können. Die Gefahr der Abscheidung auf den Düsen ist geringer. Bei Anwendung einer rotationssymmetrischen oder drehenden Mikrowellenmode Gemäß Patentanspruch 3 und eines rotationssymmetrischen Düsensystems kann auf die Rotation des herzustellenden Stabes verzichtet werden.

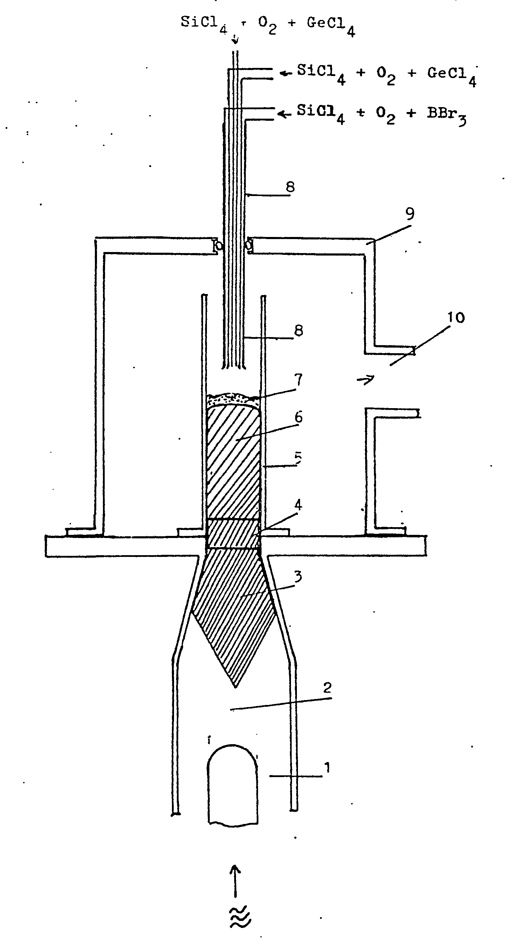

Ein Ausführungsbeispiel der Erfindung gemäß Patentansprüchen 2 und 3 ist als Längsschnitt in der Zeichnung dargestellt und wird im folgenden näher beschrieben.

In das koaxiale Leitungssystem 1 wird Mikrowellenleistung von etwa 2 kW bei der Frequenz 2,45 GHz als normale Leitungswelle eingespeist. Im leeren Rohrabschnitt 2, dessen Innendurchmesser 120 mm beträgt, wird die rotationssymmetrische $E_{01}$-Hohl-leitermode angeregt, die sich zum verengten, mit Quarzglas gefüllten Querschnitt hin ausbreitet. Zur Erzielung eines reflexionsfreien Übergangs zum kleinen Querschnitt ist der Quarzglaskörper 3 zum Generator hin kegelförmig ausgebildet. Im verengten Querschnitt mit 60 mm Durchmesser befindet sich eine in das Graphitrohr 5 hineinragende dicke Quarzglasscheibe 4 als Anfangsglied für den herzustellenden Quarzstab 6. Oberhalb der Stirnfläche des Anfangsgliedes bzw. des wachsenden Stabes klingt die Stärke des Mikrowellenfeldes rasch ab. Deshalb bildet sich an der Stirnfläche nur eine kurze Plasmazone 7 aus. Mittels des konzentrischen Düsensystems 8, das ähnlich ist dem in DE-A1- 2835326 vorgeschlagenen, strömen die Ausgangsmaterialien für den Stab als Gasstrahl in die Plasmazone. Hier werden die Moleküle dissoziiert und an der Stirnfläche bilden sich neue Moleküle, die das Stabmaterial darstellen. Durch Variation der eingegebenen Gasgemische, des Durchsatzes in den Düsenkanälen und des Abstandes der Düsen von der Stirnfläche kann eine Einstellung gefunden werden, die zur Herstellung eines Stabes mit gewünschtem radialen Brechungsindex-Profil führt. Das Düsensystem ist im Vakuumkessel 9 verschiebbar angebracht, so daß sein Abstand zur Stirnfläche des wachsenden Stabes konstant gehalten werden kann. Die elektrische Länge zwischen Stirnfläche und Mikrowellengenerator wird mit einem veränderlichen Phasenschieber konstant gehalten. Der Gasdruck am Pumpstutzen 10 beträgt etwa 1 mBar.

Selbstverständlich können auch Düsensysteme entsprechend DE-B2- 2715333, DE-A1- 2913726 und DE-A1- 2919619 angewandt werden. Da diese Düsensysteme nicht rotationssymmetrisch sind, ist es jedoch notwendig, den Stab oder die Düsensysteme rotieren zu lassen.

## Patentansprüche

1. Plasmaverfahren zur Herstellung eines dielektrischen Stabes (6) aus gasförmigen Ausgangsmaterialien, bei dem der Stab durch Abscheidung auf die Stirnfläche des Stabes in Achsrichtung wächst, indem über den Stab zur Stirnfläche hin Mikrowellenenergie geleitet wird, die an der Stirnfläche eine Gasentladung (7) aufrecht erhält, in die mittels einer oder mehrerer Düsen (8) das Ausgangsmaterial als Gasstrahl einströmt.

2. Verfahren nach Anspruch 1, dadurch gekennzeichnet, daß der Stab (6) sich koaxial in einem elektrisch leitfähigen Rohr (5) befindet, das so dimensioniert ist, daß die angeregte Hohlleitermode sich nur in dem Rohrabschnitt, in dem sich der dielektrische Stab befindet, ausbreiten kann, während im leeren Rohr oberhalb der Stirnfläche die Hohlleitergrenzfrequenz höher ist als die verwendete Mikrowellenfrequenz.

3. Verfahren nach Anspruch 1 oder 2, dadurch gekennzeichnet, daß eine rotationssymmetrische Mikrowellenmode, z.B. eine $E_{on}$-Mode, oder eine drehende nicht rotationssymmetrische Mikrowellenmode, z.b. eine auf der Achse zirkularpolarisierende H-Mode, verwendet wird.

## Claims

1. A plasma method for making a dielectric rod (6) from gaseous starting materials, the said rod growing in axial direction by deposition onto the front surface of the rod, characterized in that over the rod in the direction to the front face microwave energy is conducted which maintains a gas discharge (7) on the front face, the starting material flowing into the said gas discharge as a gas stream by means of one or several nozzles (8).

2. A method as claimed in claim 1, characterized in that the rod (6) is coaxially arranged in an electrically conductive tube (5) which is dimensioned such that the excited tubular conductor (wave guide) mode can propagate only in the tube portion in which the dielectric rod is arranged, while within the empty tube above the front face the tubular conductor frequency is higher than the employed microwave frequency.

3. A process as claimed in claim 1 or claim 2, characterized in that a microwave mode symmetrical with respect to rotation, for instance, a $E_{on}$-mode, or a rotating non-rotationally symmetrical microwave mode is used, such as a H-mode which is circularly polarizing on the axis.

## Revendications

1. Procédé à plasma pour la fabrication d'une tige diélectrique (6) à partir de matériaux de départ gazeux, dans lequel la tige croit dans la direction axiale par dépôt sur la surface frontale de la tige, caractérisé en ce que l'on envoie, par l'intermédiaire de la tige, en direction de la surface frontale, une énergie à micro-ondes qui maintient sur la surface frontale une décharge de gaz (7) dans laquelle le matériau de départ arrive sous forme de jet de gaz au moyen d'une ou plusieurs buses (8).

2. Procédé selon la revendication 1, caractérisé en ce que la tige (6) se trouve coaxialement dans un tube conducteur électrique (5) dimensionné de façon que le mode guide d'ondes excité ne puisse se propager que dans le tronçon de tube dans lequel se trouve la tige diélectrique tandis que dans le tube vide, au-dessus de la surface frontale, la fréquence limite du guide d'ondes est supérieure à la fréquence de micro-ondes employée.

3. Procédé selon la revendication 1 ou la revendication 2, caractérisé en ce que l'on emploie un mode micro-ondes à symétrie de rotation, par exemple un mode $E_{on}$, ou bien un mode micro-onde tournant sans symétrie de rotation, par exemple un mode H à polarisation circulaire sur l'axe.